(19) Europäisches Patentamt
European Patent Office
Office européen des brevets

(11) **EP 1 934 660 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(51) Int Cl.:
**G05B 19/416** (2006.01)     **B23Q 15/12** (2006.01)
**G05B 13/04** (2006.01)

(21) Anmeldenummer: 06793865.4

(22) Anmeldetag: **27.09.2006**

(86) Internationale Anmeldenummer:
**PCT/EP2006/066804**

(87) Internationale Veröffentlichungsnummer:
**WO 2007/042399 (19.04.2007 Gazette 2007/16)**

(54) **VERFAHREN UND EINRICHTUNG ZUR BEWEGUNGSFÜHRUNG EINES BEWEGBAREN MASCHINENELEMENTS EINER MASCHINE**

METHOD AND DEVICE FOR GUIDING THE DISPLACEMENT OF A DISPLACEABLE MACHINE ELEMENT IN A MACHINE

PROCEDE ET DISPOSITIF POUR GUIDER LE DEPLACEMENT D'UN ELEMENT MOBILE D'UNE MACHINE

(84) Benannte Vertragsstaaten:
**DE**

(30) Priorität: **10.10.2005 DE 102005048390**

(43) Veröffentlichungstag der Anmeldung:
**25.06.2008 Patentblatt 2008/26**

(73) Patentinhaber: **SIEMENS AKTIENGESELLSCHAFT**
**80333 München (DE)**

(72) Erfinder:
• **DENK, Joachim**
**90419 Nürnberg (DE)**
• **GEISSDÖRFER, Klaus**
**91056 Erlangen (DE)**
• **HAMANN, Jens**
**90765 Fürth (DE)**
• **SCHÄFERS, Elmar**
**90763 Fürth (DE)**
• **WEDEL, Bernd**
**91096 Möhrendorf (DE)**

(56) Entgegenhaltungen:
**US-A1- 2004 239 280     US-B1- 6 744 233**

## Beschreibung

Die Erfindung betrifft ein Verfahren und eine Einrichtung zur Bewegungsführung eines bewegbaren Maschinenelements einer Maschine.

Zur Bewegungsführung eines bewegbaren Maschinenelements einer Maschine, wie z.B. einer Werkzeugmaschine, Produktionsmaschine und/oder einem Roboter ist die Erzeugung von Führungssollgrößen, wie z.B. Solllage, Sollgeschwindigkeit und/oder Sollbeschleunigung als Regelsollgrößen für die mit der Steuerung verbundenen Regelungen zur Regelung der für die Verfahrbewegung des Maschinenelements antreibenden Motoren der Maschine, eine der zentralen Aufgaben der Steuerung. Jede Maschine weist dabei in der Regel mehrere Maschinenachsen auf, wobei jede Maschinenachse im Allgemeinen mit Hilfe eines ihr zugeordneten Motors und weiterer Komponenten, wie z.B. einem Getriebe das bewegbare Maschinenelement in Richtung der Maschinenachse bewegen kann, wobei das Maschinenelement z.B. in Form eines Werkzeugschlittens mit einem eingespannten Werkstück und/oder z.B. in Form eines Werkzeugs vorliegen kann. Der Motor, die weiteren Komponenten und das Maschinenelement stellen dabei an der Bewegung beteiligte Elemente dar.

Heutige Steuerungen berücksichtigen bei der Berechnung der Führungssollgrößen für die einzelnen Maschinenachsen einer Maschine, die Leistungsfähigkeit der betroffenen Maschinenachsen zumeist derart, dass die Führungsgrößen dermaßen erzeugt werden, dass bei der Bewegung des bewegbaren Maschinenelements die zulässigen Grenzwerte nicht überschritten werden. Um darüber hinaus die Anregung kritischer Eigenfrequenzen der an der Bewegung beteiligten Elemente zu vermeiden, werden handelsüblich verschiedene Maßnahmen durchgeführt, die jedoch mit teilweise erheblichen Einbußen an der Dynamik des Bewegungsvorgangs des bewegbaren Maschinenelements verbunden sind. Eine dieser Maßnahmen stellt z.B. die so genannte Ruckbegrenzung dar. Die Änderung der Beschleunigung, d.h. der Ruck, wird entsprechend bestimmter Profile vorgegeben oder innerhalb definierter Schranken gehalten. Insbesondere bei Werkzeugmaschinen wird die Bahngeschwindigkeit der durchzuführenden Bewegung soweit reduziert, bis die Ruckbegrenzungen der einzelnen Maschinenachsen eingehalten werden und der auf der Bahn definierte Bahnruck nicht überschritten wird. Eine gezielte Anpassung an das Schwingungsverhalten ist, insbesondere bei Werkzeugmaschinenanwendungen, somit nur sehr eingeschränkt möglich. Für eine hinreichende Fertigungsgenauigkeit muss der Ruck stark reduziert werden, so dass die Dynamik wesentlich beschränkt wird, was zu höheren Fertigungskosten führt.

Eine weitere bekannte Möglichkeit stellt die Verwendung von so genannten Kurvenscheiben dar. Bei vielen Anwendungen, insbesondere bei Produktionsmaschinen, werden die einzelnen Werte der Führungssollgrößen anhand von Kurvenscheiben generiert. Die Kurvenscheibenverläufe setzen sich dabei aus Polynomen zusammen. Eine geringe Schwingungsanregung soll dabei z.B. mittels heuristischer Festlegung erreicht werden (Kurvenscheiben möglichst "weich", Verwendung vom Polynomen hoher Ordnung). Mit einer Anpassung an das mechanische Schwingungsverhalten der an der Bewegung beteiligten Elemente kann eine entsprechende Verlangsamung des Prozesses verbunden sein, was ebenfalls schon die oben genannten Nachteile mit sich bringt.

Eine weitere bekannte Möglichkeit zur Reduktion der Schwingungsbelastung stellen so genannte lineare Führungssollgrößenfilter dar. Mittels linearer Filter werden dabei die spektralen Anteile im Bereich kritischer Frequenzen vermindert. Mit einer solchen Filterung ist jedoch immer eine Signalverzögerung verbunden. Insbesondere bei Werkzeugmaschinen entstehen dadurch Ungenauigkeiten in der Fertigung.

Aus der deutschen Patentanmeldung mit.dem amtlichen Aktenzeichen 10 2005 036 848.4 ist ein Verfahren und eine Einrichtung zur Bewegungsführung eines bewegbaren Maschinenelements einer Maschine bekannt. Bei diesen Verfahren werden z.B. bei Eingabe der Endlage und/oder Anfangslage einer durchzuführenden Verfahrbewegung des Maschinenelements eine optimierte Verfahrbewegung des bewegbaren Maschinenelemets anhand eines Modells, eines vorgegebenen Gütefunktionals und von Beschränkungen der Verfahrbewegung der Maschinenachse bestimmt.

Der Erfindung liegt die Aufgabe zugrunde, eine optimierte Bewegungsführung eines bewegbaren Maschinenelements einer Maschine zu ermöglichen.

Diese Aufgabe wird gelöst durch ein Verfahren zur Bewegungsführung eines bewegbaren Maschinenelements einer Maschine mit folgenden Verfahrensschritten

a) Vorgabe einer einen gewünschten Bewegungsvorgang des Maschinenelements beschreibenden Führungssollgröße

b) Bestimmung einer Vorsteueristgröße und/oder einer Führungsistgröße aus der Führungssollgröße anhand eines Modells, wobei das Modell ein Streckenmodell aufweist, dass das dynamische Verhalten der an der Bewegung beteiligten Elemente nachbildet.

Weiterhin wird diese Aufgabe gelöst durch eine Einrichtung zur Bewegungsführung eines bewegbaren Maschinenelements einer Maschine, wobei die Einrichtung aufweist,

- ein Führungssollgrößenerzeugungsmittel zur Vorgabe einer einen gewünschten Bewegungsvorgang des Maschinenelements beschreibenden Führungssollgröße

- ein Modell, wobei das Modell ein Streckenmodell aufweist, das das dynamische Verhalten der an der Bewegung beteiligten Elemente nachbildet, wobei anhand des Modells eine Bestimmung einer Vorsteueristgröße und/oder einer Führungsistgröße aus der Führungssollgröße durchführbar ist.

Es erweist sich für die Erfindung als vorteilhaft, wenn die Einspeisung der Vorsteueristgröße und/oder der Führungsistgröße in einen Regelkreis zur Regelung eines Motors der Maschine erfolgt. Hierdurch wird eine optimierte Regelung des Motors ermöglicht.

Weiterhin erweist es sich für die Erfindung als vorteilhaft, wenn das Verfahren in Echtzeit während des Bewegungsvorgangs des Maschinenelements durchgeführt wird. Hierdurch wird während des Fertigungsvorgangs eine optimierte Bewegungsführung ermöglicht, ohne dass im Vorfeld aufwendige Berechnungen notwendig sind.

Weiterhin erweist es sich für die Erfindung als vorteilhaft, wenn zur Ermittlung des dynamischen Verhaltens ausschließlich die mechanischen Eigenschaften der beteiligten Elemente im Streckenmodell nachgebildet sind, da ein solches Streckenmodell besonders einfach aufgestellt werden kann.

Weiterhin erweist es sich für die Erfindung als vorteilhaft, wenn als Modell ein geregeltes Streckenmodell verwendet wird. Eine Realisierung des Modells als geregeltes Streckenmodell kann besonders einfach realisiert werden.

In diesem Zusammenhang erweist es sich für die Erfindung als vorteilhaft, wenn als Modell ein geregeltes lineares Streckenmodell verwendet wird, welches mittels eines linearen Regelgesetzes geregelt wird. Eine Realisierung des Modells als geregeltes lineares Streckenmodell kann besonders einfach realisiert werden.

Ferner erweist es sich für die Erfindung als vorteilhaft, wenn eine mittels einer Rückführgröße, modifizierte Ausgangsgröße des Streckenmodells auf eine Eingangsgröße des Streckenmodells zurückgeführt wird. Durch diese Maßnahme lässt sich auf einfache Art und Weise eine Regelung erzielen..

Ferner erweist es sich für die Erfindung als vorteilhaft, wenn als Führungssollgröße eine Solllage, eine Sollgeschwindigkeit oder eine Sollbeschleunigung vorgesehen ist. Eine Solllage, eine Sollgeschwindigkeit oder eine Sollbeschleunigung stellen technisch üblich verwendende Führungssollgrößen dar.

Weiterhin erweist es sich für die Erfindung als vorteilhaft, wenn die Führungsistgröße zeitlich verzögert wird, bevor sie in den Regelkreis zur Regelung eines Motors der Maschine eingespeist wird. Hierdurch ist eine zeitliche Anpassung der Führungsistgröße an das zeitliche Verhalten des Leistungsteils (z.B. an den Umrichter), der die Energieversorgung des Motors steuert, möglich.

Ferner erweist es sich für die Erfindung als vorteilhaft, wenn der Regelkreis einen Lageregler aufweist, wobei die Differenz aus Führungsistgröße und einer gemessenen Istgröße dem Lageregler zur Regelung des Motors zugeführt wird. Hierdurch wird eine optimierte Lageregelung ermöglicht.

Ferner erweist es sich für die Erfindung als vorteilhaft, wenn der Regelkreis einen Geschwindigkeitsregler aufweist, wobei die Summe aus Ausgangssignal des Geschwindigkeitsreglers und der Vorsteueristgröße gebildet wird, wobei die solchermaßen gebildete Summe die Höhe des Motorstroms beeinflusst. Hierdurch wird eine besonders optimierte Bewegungsführung ermöglicht.

Ferner erweist es sich für die Erfindung als vorteilhaft, wenn die Maschine als Werkzeugmaschine, Produktionsmaschine und/oder als Roboter ausgebildet ist. Insbesondere bei Werkzeugmaschinen, Produktionsmaschinen und/oder Robotern treten z.B. Schwingungsproblematiken bei der Bewegungsführung auf. Selbstverständlich lässt sich die Erfindung aber auch bei anderen Arten von Maschinen verwenden.

Weiterhin erweist es sich für die Erfindung als vorteilhaft, wenn eine Einspeisung der Vorsteueristgröße und/oder der Führungsistgröße in einen Regelkreis zur Regelung eines Motors der Maschine erfolgt. Hierdurch wird eine optimierte Regelung des Motors ermöglicht.

Ferner erweist es sich für die Erfindung als vorteilhaft, wenn der Regelkreis einen Lageregler aufweist, wobei die Differenz aus Führungsistgröße und einer gemessenen Istgröße dem Lageregler zur Regelung des Motors zugeführt wird. Hierdurch wird eine optimierte Regelung des Motors ermöglicht.

Weiterhin erweist es sich für die Erfindung als vorteilhaft, wenn der Regelkreis einen Geschwindigkeitsregler aufweist, wobei die Summe aus Ausgangssignal des Geschwihdigkeitreglers und der Vorsteueristgröße gebildet wird, wobei die solchermaßen gebildete Summe die Höhe des Motorstroms beeinflusst. Hierdurch wird eine optimierte Regelung des Motors ermöglicht.

Ferner erweist es sich für die Erfindung als vorteilhaft, dass ein Computerprogrammprodukt für die erfindungsgemäße Einrichtung vorgesehen ist, das Codeabschnitte enthält, mit der das Verfahren ausführbar ist.

Vorteilhafte Ausführung des Verfahrens ergeben sich analog zur vorteilhaften Ausführung der Einrichtung und umgekehrt.

Ein Ausführungsbeispiel der Erfindung ist in der Zeichnung dargestellt und wird im Folgenden näher erläutert. Dabei zeigen:

FIG 1    eine schematische Darstellung eines Zweimassenschwingers,

FIG 2     eine schematische Darstellung eines erfindungsgemäßen Verfahrens und einer erfindungsgemäßen Einrichtung zur Bewegungsführung eines bewegbaren Maschinenelements einer Maschine und

FIG 3.     eine allgemeine schematische Darstellung der Erfindung.

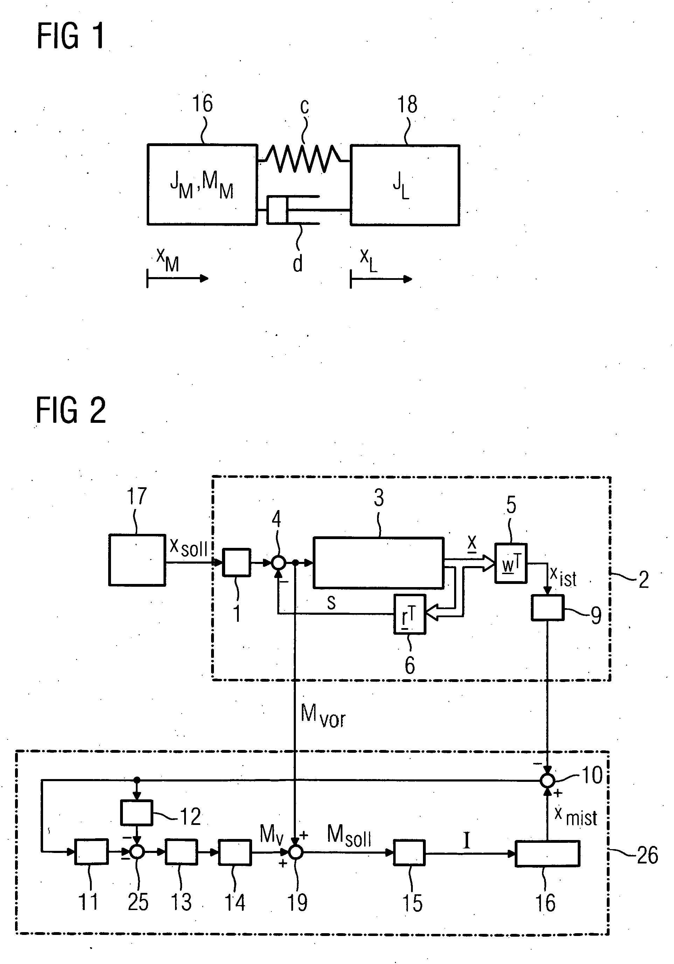

FIG 1 zeigt die schematische Darstellung eines Zweimassenschwingers bestehend aus einem Motor 16, der mit einer Last 18 verbunden ist. Der Motor 16 weist eine Motorträgheit $J_M$ und ein Motormoment $M_M$ auf. Die Last 18 weist eine Lastträgheit $J_L$ auf. Die Verbindung zwischen dem Motor 16 und der Last 18 weist eine Steifigkeit c und eine Dämpfung d auf. Die Verbindung kann z.B. in Form eines Getriebes vorliegen. Wenn sich die Lage $x_M$ des Rotors des Motors 16 verändert ($x_M$ = Rotorlagewinkel), verändert sich unter anderem infolge der endlichen Torsionssteifigkeit, insbesondere für den dynamischen Fall die Lage der Last $x_L$ nicht wie es durch eine reine Veränderung der Lage des Motors $x_M$ zu erwarten gewesen wäre, sondern die Lage der Last $x_L$ fängt gegenüber der Lage des Motors $x_M$ an zu schwingen. Die Systemdynamik des Zweimassenschwingers aus FIG 1 mit dem Motormoment $M_M$ wird mathematisch durch das System von Differenzialgleichungen

$$
\begin{aligned}
J_M \cdot \ddot{x}_M &+ d \cdot (\dot{x}_M - \dot{x}_L) + c \cdot (x_M - x_L) = M_M \\
J_L \cdot \ddot{x}_L &- d \cdot (\dot{x}_M - \dot{x}_L) - c \cdot (x_M - x_L) = 0
\end{aligned}
\tag{1}
$$

beschrieben. Hieraus resultiert nach den Substitutionen

$$
x_1 = x_M = x_M(t), \quad x_2 = x_L, \quad x_3 = \dot{x}_M = v_M(t), \quad x_4 = \dot{x}_L, \quad u = M_M = m_M(t)
\tag{2}
$$

$$
\begin{aligned}
\dot{x}_1 &= x_3 \\
\dot{x}_2 &= x_4 \\
\dot{x}_3 &= J_M^{-1} \cdot \left[ -d \cdot (x_3 - x_4) - c \cdot (x_1 - x_2) + u \right] \\
\dot{x}_4 &= J_L^{-1} \cdot \left[ d \cdot (x_3 - x_4) + c \cdot (x_1 - x_2) \right]
\end{aligned}
\tag{3}
$$

oder kurz

$$
\underline{\dot{x}} = \underline{A} \cdot \underline{x} + \underline{b} \cdot u
\tag{4}
$$

mit dem Zustandsvektor

$$
\underline{x} = \begin{bmatrix} x_1 & x_2 & x_3 & x_4 \end{bmatrix}^T
\tag{5}
$$

und

$$
\underline{A} = \begin{bmatrix} 0 & 0 & 1 & 0 \\ 0 & 0 & 0 & 1 \\ -J_M^{-1} \cdot c & J_M^{-1} \cdot c & -J_M^{-1} \cdot d & J_M^{-1} \cdot d \\ J_M^{-1} \cdot c & -J_M^{-1} \cdot c & J_M^{-1} \cdot d & -J_M^{-1} \cdot d \end{bmatrix}
\tag{6}
$$

$$b = \begin{bmatrix} 0 \\ 0 \\ 1 \\ 0 \end{bmatrix} \qquad\qquad (7)$$

Im Rahmen des Ausführungsbeispiels wird die Maschinenachse der Maschine durch den Motor 16, durch die Last 18 und durch die Verbindung zwischen dem Motor 16 und der Last 18, wobei die Verbindung die Steifigkeit c und eine Dämpfung d aufweist, gebildet. D.h. die an der Bewegung beteiligten Elemente werden durch den Motor 16, durch die Verbindung und durch die Last 18 gebildet.

Im Rahmen des Ausführungsbeispiels werden in dem oben beschriebenen Streckenmodell zur Ermittlung des dynamischen Verhaltens der an der Bewegung beteiligten Elemente ausschließlich die mechanischen Eigenschaften der beteiligten Elemente im Streckenmodell nachgebildet. Das Streckenmodell kann solchermaßen besonders einfach aufgestellt werden. Prinzipiell ist es aber auch möglich, auch das Verhalten eines den Motors 16 ansteuernden Leistungsteils (z.B. Umrichter) in der Modellbildung zu berücksichtigen. Dies hat jedoch den Nachteil, dass das Streckenmodell abhängig von der Parametrierung des Leistungsteils wird. Mittels einem dem Streckenmodell nachgeschalteten Verzögerers kann.dagegen das Verhalten des Leistungsteils, sowie eventuell weiterer im Modell nicht berücksichtigter Verzögerungen, unabhängig vom Entwurf des Streckenmodells eingebracht werden.

In FIG 2 ist im Rahmen einer schematischen Darstellung ein erfindungsgemäßes Verfahren und eine erfindungsgemäße Einrichtung zur Bewegungsführung eines bewegbaren Maschinenelements einer Maschine dargestellt. Die Einrichtung kann dabei z.B. in Form einer numerischen Steuerung und/oder einer Regeleinrichtung der Maschine vorliegen. Die Einrichtung weist ein Führungsgrößenerzeugungsmittel 17 auf, das eine den gewünschten Bewegungsvorgang des Maschinenelements, d.h. im Ausführungsbeispiel der Last 18, beschreibende Führungssollgröße $x_{soll}$, die im Rahmen des Ausführungsbeispiels als Führungssolllage vorliegt, erzeugt und solchermaßen vorgibt. Anstatt einer Lage könnte jedoch auch eine Geschwindigkeit oder eine Beschleunigung vom Führungssollgrößenerzeugungsmittel 17 vorgegeben werden. Das Führungsgrößenerzeugungsmittel 17 ist als Bestandteil der numerischen Steuerung bei Maschinen, wie z.B. Werkzeugmaschinen, Produktionsmaschinen und/oder Robotern handelsüblich vorhanden. Die Führungssollgröße $x_{soll}$ wird dabei handelsüblich als Sollgröße einem nachgeschalteten Regelkreis zugeführt, der den Bewegungsvorgang des zu bewegenden Maschinenelements entsprechend der vorgegebenen Führungssollgröße $x_{soll}$ regelt.

Erfindungsgemäß werden nun zwischen den Führungssollgrößenerzeugungsmittel 17 und dem Regelkreis 26 ein Modell 2 zur Bestimmung einer Führungsistgröße $x_{ist}$ und/oder einer Vorsteueristgröße $M_{vor}$ zwischengeschaltet. Die Vorsteueristgröße $M_{vor}$ liegt im Rahmen des Ausführungsbeispiels als Vorsteuermoment vor und die Führungsistgröße $x_{ist}$ liegt im Rahmen des Ausführungsbeispiels als Lagemodellistgröße vor. Das Modell 2 weist dabei das schon oben beschriebene Streckenmodell 3 und einen Zustandsregler auf, der in Form eines Rückführvektors 6 und eines Anpassglieds 1 realisiert ist. Weiterhin weist das Modell 2 einen Anpassvektor $\underline{w}$ (siehe Bezugszeichen 5) auf. Im Rahmen des Ausführungsbeispiels liegt das Modell 2 in Form eines geregelten Streckenmodells vor, bei dem eine mittels einer Rückführgröße (siehe Bezugszeichen 6), die im Rahmen des Ausführungsbeispiels als Rückführvektor $\underline{r}$ ausgebildet ist, modifizierte Ausgangsgröße des Streckenmodells, die im Rahmen des Ausführungsbeispiels als Zustandvektor $\underline{x}$ ausgebildet ist, auf eine Eingangsgröße des Streckenmodells 3 zurückgeführt wird. Mit Hilfe des Streckenmodell 3 wird das mechanische Verhalten des Motors 16, der Last 18 und der mechanischen Verbindung zwischen Motor 16 und Last 18 nachgebildet und solchermaßen das dynamische Verhalten der bei der Bewegung beteiligten Elemente nachgebildet. Mit Hilfe des Zustandsreglers werden unerwünschte Eigenschaften der an der Bewegung beteiligten Elemente solchermaßen vorab ausgeregelt und die Vorsteueristgröße $M_{vor}$ und die Führungsistgröße $x_{ist}$ bestimmt. Der Rückführvektor $\underline{r}$ (siehe Bezugszeichen 6) der aus dem Zustandsvektor $\underline{x}$ eine skalare Größe s macht, weist im Rahmen des Ausführungsbeispiels die Form

$$\underline{r} = \begin{bmatrix} r_1 \\ r_2 \\ r_3 \\ r_4 \end{bmatrix} \qquad\qquad (8)$$

auf, mit den Rückführkoeffizienten $r_1$, $r_2$, $r_3$ und $r_4$, wobei gilt

$$s = \underline{x} \cdot \underline{r}^T \qquad\qquad (9)$$

Der zur Erzeugung der skalaren Führungsistgröße $x_{ist}$ notwendige Anpassvektor $\underline{w}$, der aus dem Zustandsvektor $\underline{x}$ die skalare Führungsistgröße $X_{ist}$ macht, weist im Rahmen des Ausführungsbeispiels die Form

$$\underline{w} = \begin{bmatrix} 1 \\ 0 \\ 0 \\ 0 \end{bmatrix} \qquad\qquad (10)$$

auf, wobei gilt

$$x_{ist} = \underline{x} \cdot \underline{w}^T \qquad\qquad (11)$$

Für eine Regelstrecke, die in einer Form gemäß der Beziehung (4) beschrieben ist mit einer Stellgröße u, kann die Berechnung der Rückführkoeffizienten $r_1$, $r_2$, $r_3$ und $r_4$ des Rückführvektors $\underline{r}$ beispielsweise mit Hilfe der regelungstechnisch allgemein bekannten so genannten Ackermannformel erfolgen:
Dabei gilt:

$$\underline{r}^T = \underline{t}_a^T \cdot p(\underline{A}) \qquad ; \qquad (12)$$

Dabei ist $p(\underline{A})$ das charakteristische Polynom des geregelten Systems, ergibt sich also aus den gewünschten Eigenwerten des geregelten Systems mit

$$p(s) = s^n + p_{n-1} \cdot s^{n-1} + \ldots + p_1 \cdot s + p_0 \qquad\qquad (13)$$

$\underline{t}_a^T$ ist dabei die letzte Zeile der inversen Steuerbarkeitsmatrix $\underline{Q}_s^{-1}$ mit

$$\underline{Q}_s^{-1} = \left[ \underline{b}, \underline{A} \cdot \underline{b}, \ldots \underline{A}^{n-1} \cdot \underline{b} \right]^{-1} . \qquad\qquad (14)$$

Steuerbarkeit der Regelstrecke ist dabei offensichtlich vorauszusetzen. Bei den hier betrachteten Systemen ist Steuerbarkeit aber immer gegeben.
Die Rückführgröße $\underline{r}$ kann dabei z.B. so gewählt werden, dass eine einzelne oder mehrere Eigenschwingungsfrequenzen des Streckenmodells 3 gedämpft werden. Mit Hilfe des Anpassglieds 1, das z.B. in Form eines Vorfilters vorliegen kann, lässt sich die Gesamtverstärkung des Modells 2 beeinflussen. So kann das Anpassglied 1 im einfachsten Fall in einer Multiplikation der Führungssollgröße $x_{soll}$ mit einem konstanten Faktor (z.B. 1,5) bestehen. Mit Hilfe eines Subtrahierers 4 wird die mittels der Rückführgröße $\underline{r}$ modifizierte Ausgangsgröße $\underline{x}$ (Zustandsvektor) des Streckenmodells 3 von der durch das Anpassglied 1 modifizierten Führungssollgröße $x_{soll}$ subtrahiert und das solchermaßen vom Subtrahierer 4 erzeugte Ausgangssignal, das die Vorsteueristgröße $M_{vor}$ darstellt, dem Streckenmodells 3 als Eingangsgröße zugeführt. Dieses gibt als Ausgangsgröße den Zustandsvektor $\underline{x}$ aus, wobei anschließend mittels des Anpassvektors $\underline{w}$, die skalare Führungsistgröße $x_{ist}$ erzeugt wird. Mit Hilfe eines nachgeschalteten Verzögerers 9 wird die Frührungsistgröße $x_{ist}$ entsprechend der Verzögerung des Leistungsteils 15 (Zeit, die das Leistungsteil 15'benötigt um den Strom I aufzubauen) verzögert und am Ausgang des Verzögerers 9 ausgegeben. Die Verzögerung muss jedoch nicht unbedingt durchgeführt werden.

Die solchermaßen bestimmte Vorsteueristgröße $M_{vor}$ und die verzögerte Führungsistgröße $x_{ist}$ werden in den Regelkreis 26 zur Regelung des Motors 16 eingespeist. Mit Hilfe eines Subtrahierers 10 wird die verzögerte Führungsistgröße $x_{ist}$ von einer, z.B. mittels eines Gebers, gemessenen Istgröße $x_{mist}$, die in dem Ausführungsbeispiel in Form einer am Motor gemessenen Lage ($x_{mist}$ = Rotorlagewinkel) vorliegt, berechnet. Die solchermaßen berechnete Differenz wird anschließend einem Differenzierer 12, der die zeitliche Ableitung ermittelt und an einen Lageregler 11 weiterleitet, zugeführt. Die Ausgangsgröße des Differenzierers 12 und des Lagereglers 11 werden negiert und mit Hilfe eines Addierers 25 addiert. Die Ausgangsgröße des Addierers 25 wird einem Geschwindigkeitsregler 13 als Eingangsgröße zugeführt. Die Ausgangsgröße des Geschwindigkeitsreglers 13 wird anschließend mit Hilfe eines Filters 14, der nicht notwendigerweise vorhanden sein braucht, gefiltert um eventuell noch auftretende unerwünschte Eigenschaften in Frequenzgang herauszufiltern. Das Ausgangssignal $M_v$ (Regleristmoment) des Filters 14 wird mit Hilfe eines Addierers 19 zur Vorsteueristgröße $M_{vor}$ (Vorsteuermoment) addiert und solchermaßen das Sollmoment $M_{soll}$ berechnet. Das Sollmoment $M_{soll}$ wird anschließend als Eingangsgröße dem Leistungsteil 15 zugeführt, das, z.B. in Form eines Umrichters mit zugehöriger Ansteuerelektronik vorliegenden kann, wobei das Leistungsteil 15 entsprechend dem Sollmoment $M_{soll}$ die Höhe des Motorstroms I beeinflusst und solchermaßen den Bewegungsvorgang des Maschinenelements steuert.

Zur Realisierung des Modells 2 sind einige Vereinfachungen möglich. So muss nicht wie im Ausführungsbeispiel eine rückgekoppelte Modellstruktur implementiert werden, sondern es ist ausreichend, das Modell 2 mit Hilfe linearer Differenzengleichungen, die aus einer Führungssollgröße eine Vorsteueristgröße und/oder eine Führungsistgröße berechnen, zu realisieren.

Es sei an dieser Stelle angemerkt, dass das in FIG 2 dargestellte Modell 2 und der Regelkreis 18 im Rahmen des Ausführungsbeispiels'für jede Maschinenachse der Maschine vorhanden ist, wobei das Führungssollgrößenerzeugungsmittel 17 für jede Maschinenachse eine ihr zugehörige Führungssollgröße $x_{soll}$ erzeugt und dem jeweilig zugehörigen Modell als Eingangsgröße vorgibt.

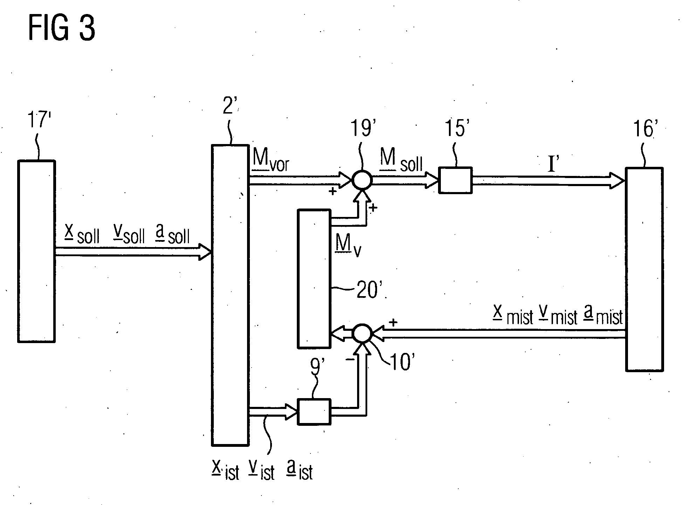

In FIG 3 ist noch einmal die allgemeine erfinderische Idee des Verfahrens und der Einrichtung dargestellt, wobei der allgemeine Fall dargestellt ist, bei dem die einzelnen Maschineachsen miteinander verkoppelt sein können, das heißt z. B. eine Lageveränderung einer Maschinenachse bewirkt automatisch auch eine Lageveränderung von anderen Maschinenachsen (z. B. bei einem Roboterarm mit mehreren Gelenken). Mit Hilfe eines Sollwerterzeugungsmittels 17' wird eine einzelne oder mehrere Führungssollgrößen wie z.B. eine Solllage $\underline{x}_{soll}$, eine Sollgeschwindigkeit $\underline{v}_{soll}$ und/oder eine Sollbeschleunigung $\underline{a}_{soll}$, einem Modell 2' als Eingangsgrößen vorgegeben. Die einzelnen Größen können dabei, entsprechend der Anzahl der zu bewegenden Maschinenachsen, als Vektor vorliegen. Das Modell 2' ermittelt dabei für die einzelnen Maschinenachsen der Maschine eine einzelne oder mehrere Führungsistgrößen wie z. B. eine Momentenistgröße $\underline{M}_{ist}$, eine Geschwindigkeitsistgröße $\underline{v}_{ist}$ und/oder eine Beschleunigungsistgröße $\underline{a}_{ist}$. Diese Größen können ebenfalls als Vektor vorliegen. Sie werden mit Hilfe eines Verzögerers 9' entsprechend der zeitlichen Verzögerung des Leistungsteil 15 verzögert. An dem Motor 16' und/oder von einer anderen Stelle werden gemessene Größen wie z.B. eine gemessene Lageistgröße $\underline{x}_{mist}$, eine gemessene Geschwindigkeitsistgröße $\underline{v}_{mist}$ und/oder gemessene Beschleunigungsistgröße $\underline{a}_{mist}$, wobei die Größen auch als Vektor vorliegen können, von dem vom Model 2' berechneten verzögerten Führungsgrößen mittels eines Subtrahierers 10' abgezogen und die Differenz einer Regelung 20' zugeführt. Diese ermitteln als Ausgangsgröße das Regelmoment $\underline{M}_v$, wobei anschließend mittels eines Addierers 19 die Vorsteuergröße $\underline{M}_{vor}$ von den Regelmoment $\underline{M}_v$ addiert wird und solchermaßen ein Sollmoment $\underline{M}_{soll}$, bestimmt wird und als Eingangsgröße einem Leistungsteil 15 zugeführt wird ($M_{vor}$, $\underline{M}_v$ und $\underline{M}_{soll}$ können dabei ebenfalls als Vektor vorliegen). Das Leistungsteil 15' liefert dabei die Ströme I' für die einzelnen Motoren 16' zum Bewegen der Maschinenachse der Maschine. Somit kann der allgemeine erfinderische Ansatz auch bei Maschinen, bei denen gekoppelten Maschinenachsen vorliegen, mit Hilfe eines Modells 2', dass auch die Kopplungen der Maschinenachsen berücksichtigt, realisiert werden.

Mit Hilfe der Erfindung kann z.B. bei der Erzeugung der Führungssollgrößen auf eine eng eingestellte Ruckbegrenzung und/oder den Einsatz von linearen Führungsgrößenfiltern verzichtet werden und somit insbesondere das dynamische Verhalten der Bewegung verbessert werden.

**Patentansprüche**

1. Verfahren zur Bewegungsführung eines bewegbaren Maschinenelements (18) einer Maschine mit folgenden Verfahrensschritten

a) Vorgabe einer einen gewünschten Bewegungsvorgang des Maschinenelements (18) beschreibenden Führungssollgröße ($x_{soll}$).

b) Bestimmung einer Vorsteueristgröße ($M_{vor}$) und einer Führungsistgröße ($x_{ist}$) aus der Führungssollgröße ($x_{soll}$) anhand eines Modells (2), wobei das Modell (2) ein Streckenmodell (3) aufweist, dass das dynamische Verhalten der an der Bewegung beteiligten Elemente (16,18) nachbildet, wobei als Modell (2) ein geregeltes Streckenmodell verwendet wird,

c) Einspeisung der Vorsteueristgröße ($M_{vor}$) und der Führungsistgröße ($x_{ist}$) in einen Regelkreis (26) zur Regelung eines Motors (16) der Maschine.

2.  Verfahren nach Anspruch 1 oder 2, **dadurch gekennzeichnet, dass** das Verfahren in Echtzeit während des Bewegungsvorgangs des Maschinenelements (18) durchgeführt wird.

3.  Verfahren nach einem der vorhergehenden Ansprüche, **dadurch gekennzeichnet, dass** zur Ermittelung des dynamischen Verhaltens ausschließlich die mechanischen Eigenschaften der beteiligten Elemente im Streckenmodell (3) nachgebildet sind.

4.  Verfahren nach einem der vorhergehenden Ansprüche, **dadurch gekennzeichnet, dass** als Modell (2) ein geregeltes lineares Streckenmodell verwendet wird, welches mittels eines linearen Regelgesetzes geregelt wird.

5.  Verfahren nach einem der vorhergehenden Ansprüche, **dadurch gekennzeichnet, dass** eine mittels einer Rückführgröße ($\underline{r}$), modifizierte Ausgangsgröße ($\underline{x}$) des Streckenmodells (3) auf eine Eingangsgröße des Streckenmodells zurückgeführt wird.

6.  Verfahren nach einem der vorhergehenden Ansprüche, **dadurch gekennzeichnet, dass** als Führungssollgröße eine Solllage ($x_{soll}$), eine Sollgeschwindigkeit ($v_{soll}$) oder eine Sollbeschleunigung ($a_{soll}$) vorgesehen ist.

7.  Verfahren nach einem der vorhergehenden Ansprüche, **dadurch gekennzeichnet, dass** die Führungsistgröße ($x_{ist}$) zeitlich verzögert wird, bevor sie in den Regelkreis (26) zur Regelung eines Motors (16) der Maschine eingespeist wird.

8.  Verfahren nach einem der vorhergehenden Ansprüche, **dadurch gekennzeichnet, dass** der Regelkreis (26) einen Lageregler (11) aufweist, wobei die Differenz aus Führungsistgröße ($x_{ist}$) und einer gemessenen Istgröße ($x_{mist}$) dem Lageregler (11) zur Regelung des Motors (16) zugeführt wird.

9.  Verfahren nach einem der vorhergehenden Ansprüche, **dadurch gekennzeichnet, dass** der Regelkreis (26) einen Geschwindigkeitsregler (13) aufweist, wobei die Summe aus Ausgangssignal ($M_v$) des Geschwindigkeitreglers (13) und der Vorsteueristgröße ($M_{vor}$) gebildet wird, wobei die solchermaßen gebildete Summe die Höhe des Motorstroms (I) beeinflusst.

10. Verfähren nach einem der vorhergehenden Ansprüche, **dadurch gekennzeichnet, dass** die Maschine als Werkzeugmaschine, Produktionsmaschine und/oder als Roboter ausgebildet ist.

11. Einrichtung zur Bewegungsführung eines bewegbaren Maschinenelements einer Maschine, wobei die Einrichtung aufweist,

    - ein Führungssollgrößenerzeugungsmittel (17) zur Vorgabe einer einen gewünschten Bewegungsvorgang des Maschinenelements (18), beschreibenden Führungssollgröße ($x_{soll}$),
    - ein Modell (2), wobei das Modell (2) ein Streckenmodell (3) aufweist, das das dynamische Verhalten der an der Bewegung beteiligten Elemente (16,18) nachbildet, wobei als Modell (2) ein geregeltes Streckenmodell verwendet wird, wobei anhand des Modells (2) eine Bestimmung einer Vorsteueristgröße ($M_{vor}$) und einer Führungsistgröße ($x_{ist}$) aus der Führungssollgröße ($x_{soll}$) durchführbar ist, wobei eine Einspeisung der Vorsteueristgröße ($M_{vor}$) und der Führungsistgröße ($x_{ist}$) in einen Regelkreis (26) zur Regelung eines Motors (16) der Maschine erfolgt.

12. Einrichtung nach Anspruch 11, **dadurch gekennzeichnet, dass** der Regelkreis (26) einen Lageregler (11) aufweist, wobei die Differenz aus Führungsistgröße ($x_{ist}$) und einer gemessenen Istgröße ($x_{mist}$) dem Lageregler (11) zur Regelung des Motors (16) zugeführt wird.

**13.** Einrichtung nach Anspruch 11 oder 12, **dadurch gekennzeichnet, dass** der Regelkreis (26) einen Geschwindigkeitsregler aufweist, wobei die Summe aus Ausgangssignal ($M_v$) des Geschwindigkeitreglers (13) und der Vorsteueristgröße gebildet wird, wobei die solchermaßen gebildete Summe die Höhe des Motorstroms (I) beeinflusst.

**14.** Einrichtung nach Anspruch 11, 12 oder 13, **dadurch gekennzeichnet, dass** die Maschine als Werkzeugmaschine, Produktionsmaschine und/oder als Roboter ausgebildet ist.

**Claims**

**1.** Method for guiding the movement of a moveable machine element (18) of a machine, having the following method steps:

a) specifying a desired reference variable ($x_{soll}$) describing a desired movement operation of the machine element (18),
b) determining an actual precontrol variable ($M_{vor}$) and an actual reference variable ($x_{ist}$) from the desired reference variable ($x_{soll}$) with the aid of a model (2), the model (2) having a system model (3) that simulates the dynamic behavior of the elements (16, 18) participating in the movement, a controlled system model being used as model (2),
c) feeding the actual precontrol variable ($M_{vor}$) and the actual reference variable ($x_{ist}$) into a control loop (26) for controlling a motor (16) of the machine.

**2.** Method according to Claim 1 or 2, **characterized in that** the method is carried out in real time during the movement operation of the machine element (18).

**3.** Method according to one of the preceding claims, **characterized in that** it is exclusively the mechanical properties of the participating elements that are simulated in the system model (3) in order to determine the dynamic behavior.

**4.** Method according to one of the preceding claims, **characterized in that** use is made as model (2) of a controlled linear system model that is controlled by means of a linear control law.

**5.** Method according to one of the preceding claims, **characterized in that** an output variable (x) of the system model (3) that is modified by means of a feedback variable (r) is fed back to an input variable of the system model.

**6.** Method according to one of the preceding claims, **characterized in that** a desired position ($x_{soll}$), a desired speed ($v_{soll}$) or a desired acceleration ($a_{soll}$) is provided as desired reference variable.

**7.** Method according to one of the preceding claims, **characterized in that** the actual reference variable ($x_{ist}$) is time delayed before it is fed into the control loop (26) for controlling a motor (16) of the machine.

**8.** Method according to one of the preceding claims, **characterized in that** the control loop (26) has a position controller (11), the difference between the actual reference variable ($x_{ist}$) and a measured actual variable ($x_{mist}$) being fed to the position controller (11) in order to control the motor (16).

**9.** Method according to one of the preceding claims, **characterized in that** the control loop (26) has a speed controller (13), the sum of the output signal ($M_v$) of the speed controller (13) and the actual precontrol variable ($M_{vor}$) being formed, the sum formed in such a way influencing the level of the motor current (I).

**10.** Method according to one of the preceding claims, **characterized in that** the machine is designed as a machine tool, production machine and/or as a robot.

**11.** Device for guiding the movement of a moveable machine element of a machine, the device having

- a means (17) for generating a desired reference variable in order to specify a desired reference variable ($x_{soll}$) describing a desired movement operation of the machine element (18),
- a model (2) having a system model (3) that simulates the dynamic behavior of the elements (16, 18) participating in the movement, a controlled system model being used as model (2), it being possible to use the model (2) to carry out a determination of an actual precontrol variable ($M_{vor}$) and an actual reference variable ($x_{ist}$) from the

desired reference variable (x$_{soll}$), the actual precontrol variable (M$_{vor}$) and the actual reference variable (x$_{ist}$) being fed into a control loop (26) for controlling a motor (16) of the machine.

12. Device according to Claim 11, **characterized in that** the control loop (26) has a position controller (11), the difference between the actual reference variable (x$_{ist}$) and a measured actual variable (x$_{mist}$) being fed to the position controller (11) in order to control the motor (16).

13. Device according to Claim 11 or 12, **characterized in that** the control loop (26) has a speed controller, the sum of the output signal (M$_{v}$) of the speed controller (13) and the actual precontrol variable being formed, the sum formed in such a way influencing the level of the motor current (I).

14. Device according to Claim 11, 12 or 13, **characterized in that** the machine is designed as a machine tool, production machine and/or as a robot.

**Revendications**

1. Procédé de guidage du déplacement d'un élément ( 18 ) mobile d'une machine ayant les stades de procédé suivants :

   a) on prescrit une grandeur ( xsoll ) de consigne de guidage décrivant un déroulement de déplacement souhaité de l'élément ( 18 ) de machine,
   b) on détermine une grandeur ( Mvor ) réelle de commande préalable et une grandeur ( xist ) réelle de guidage à partir de la grandeur ( xsoll ) de consigne de guidage à l'aide d'un modèle ( 2 ), le modèle ( 2 ) ayant un modèle ( 3 ) de déplacement qui reproduit le comportement dynamique des éléments ( 16, 18 ) participant au déplacement en utilisant comme modèle ( 2 ) un modèle de déplacement régulé,
   c) on injecte la grandeur ( Mvor ) réelle de commande préalable et la grandeur ( xist ) réelle de guidage dans un circuit ( 26 ) de régulation pour réguler un moteur ( 16 ) de la machine.

2. Procédé suivant la revendication 1 ou 2, **caractérisé en ce que** l'on effectue le procédé en temps réel pendant que le déplacement de l'élément ( 18 ) de machine se déroule.

3. Procédé suivant l'une des revendications précédentes, **caractérisé en ce que**, pour la détermination du comportement dynamique, on reproduit dans le modèle ( 3 ) de déplacement exclusivement des propriétés mécaniques des éléments participants.

4. Procédé suivant l'une des revendications précédentes, **caractérisé en ce que** l'on utilise comme modèle ( 2 ) un modèle de déplacement linéaire régulé, qui est régulé au moyen d'une loi de régulation linéaire.

5. Procédé suivant l'une des revendications précédentes, **caractérisé en ce qu'**on renvoie une grandeur ( x ) de sortie du modèle ( 3 ) de déplacement, modifiée au moyen d'une grandeur ( r ) de renvoi à une grandeur d'entrée du modèle de déplacement.

6. Procédé suivant l'une des revendications précédentes, **caractérisé en ce que** l'on prévoit comme grandeur de consigne de guidage une position ( xsoll ) de consigne, une vitesse ( vsoll ) de consigne, une accélération ( asoll ) de consigne.

7. Procédé suivant l'une des revendications précédentes, **caractérisé en ce que** l'on retarde dans le temps la grandeur ( xist ) réelle de guidage avant de l'injecter dans le circuit ( 26 ) de régulation pour la régulation d'un moteur ( 16 ) de la machine.

8. Procédé suivant l'une des revendications précédentes, **caractérisé en ce que** le circuit ( 26 ) de régulation a un régleur ( 11 ) de position, la différence entre une grandeur ( xist ) réelle de guidage et une grandeur ( xmist ) réelle mesurée étant envoyée au régleur ( 11 ) de position pour la régulation du moteur ( 16 ).

9. Procédé suivant l'une des revendications précédentes, **caractérisé en ce que** le circuit ( 26 ) de régulation a un régleur ( 13 ) de vitesse, la somme du signal ( Mv ) de sortie du régleur ( 13 ) de vitesse et de la grandeur ( Mvor ) réelle de commande préalable étant formée, la somme ainsi formée influençant l'intensité du courant ( I ) du moteur.

**10.** Procédé suivant l'une des revendications précédentes, **caractérisé en ce que** la machine est constituée sous la forme d'une machine outil, d'une machine de production et/ou d'un robot.

**11.** Dispositif de guidage du déplacement d'un élément mobile d'une machine, le dispositif comprenant :

- un moyen ( 17 ) de production d'une grandeur de consigne de guidage pour la prescription d'une grandeur ( xsoll ) de consigne de guidage décrivant un déroulement souhaité du déplacement de l'élément ( 18 ) de machine,
- un modèle ( 2 ), le modèle ( 2 ) comprenant un modèle ( 3 ) de déplacement qui reproduit le comportement dynamique des éléments ( 16, 18 ) participant au déplacement, on utilise comme modèle ( 2 ) un modèle de déplacement régulé, dans lequel on peut au moyen du modèle ( 2 ) effectuer une détermination d'une grandeur ( Mvor ) réelle de commande préalable et d'une grandeur ( Xist ) réelle de guidage à partir de la grandeur ( xsoll ) consigne de guidage, une injection de la grandeur ( Mvor ) réelle de commande préalable et de la grandeur ( xist ) réelle de guidage dans un circuit ( 26 ) de régulation étant effectuée pour la régulation d'un moteur ( 16 ) de la machine.

**12.** Dispositif suivant la revendication 11, **caractérisé en ce que** le circuit ( 26 ) de régulation a un régleur ( 11 ) de position, la différence entre une grandeur ( xist ) réelle de guidage et une grandeur ( xmist ) réelle mesurée étant envoyée au régleur ( 11 ) de position pour la régulation du moteur ( 16 ).

**13.** Dispositif suivant la revendication 11 ou 12, **caractérisé en ce que** le circuit ( 26 ) de régulation a un régleur ( 13 ) de vitesse, la somme du signal ( Mv ) de sortie du régleur ( 13 ) de vitesse et de la grandeur ( Mvor ) réelle de commande préalable étant formée, la somme ainsi formée influençant l'intensité du courant ( I ) du moteur.

**14.** Dispositif la revendication 11, 12 ou 13, **caractérisé en ce que** la machine est constituée sous la forme d'une machine outil, d'une machine de production et/ou d'un robot.

# FIG 1

# FIG 2

EP 1 934 660 B1

FIG 3

$\underline{x}_{soll}$ $\underline{v}_{soll}$ $\underline{a}_{soll}$

$\underline{M}_{vor}$

$\underline{M}_{soll}$

$\underline{M}_v$

$I'$

$\underline{x}_{mist}$ $\underline{v}_{mist}$ $\underline{a}_{mist}$

$\underline{x}_{ist}$ $\underline{v}_{ist}$ $\underline{a}_{ist}$

13

**EP 1 934 660 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005036848